# EUROPEAN PATENT SPECIFICATION

(11) **EP 2 719 039 B1**
(45) Date of publication and mention of the grant of the patent: **06.05.2015**
(21) Application number: 12731233.8
(22) Date of filing: 11.06.2012
(51) Int. Cl.: H02G 3/04, D03D 1/00, D03D 3/02, D03D 15/00

(54) **REFLECTIVE TEXTILE SLEEVE AND METHOD OF CONSTRUCTION THEREOF**
REFLEKTIVE TEXTILHÜLLE UND VERFAHREN ZU IHRER HERSTELLUNG
MANCHON EN TISSU RÉFLÉCHISSANT ET PROCÉDÉ DE CONSTRUCTION DE CELUI-CI

(30) Priority: 09.06.2011 US 201161494927 P
(43) Date of publication of application: 16.04.2014
(73) Proprietor: Federal-Mogul Powertrain, Inc., Southfield, MI 48033 (US)
(72) Inventor: KASHIHARA, Emi, Sagamihara Kanagawa 252-0203 (JP); TANAKA, Kazushi, Sagamihara Kanagawa 045-479-0442 (JP)
(74) Representative: Barker, Rosemary Anne
(86) International application number: PCT/US2012/041824
(87) International publication number: WO 2012/170981

(56) References cited:
- EP-A1- 2 270 267
- WO-A1-93/09281
- WO-A2-2005/022564
- US-A- 2 357 851

## Description

### BACKGROUND OF THE INVENTION

### 1. TECHNICAL FIELD

This invention relates generally to textile sleeves for protecting elongate members, and more particularly to textile sleeves having a reflective outer surface.

### 2. RELATED ART

Tubular textile sleeves are known for use to provide protection to internally contained elongate members, such as a wire harness or cable, for example. It is further known to apply a coating on an outer surface of textile sleeves to provide a heat reflective surface on the sleeve. In some cases, a layer of foil can be disposed about an outer surface of a sleeve, wherein the outer layer of foil provides a reflective barrier to radiant heat, thereby offering protection against heat to the underlying sleeve and the elongate members within the sleeve. Although the foil layer is generally effective to shield the sleeve and contents therein from heat, it is susceptible to tearing or otherwise being damaged by debris or other matter, and further, it limits the degree to which the sleeve can be flexed. In addition, having to apply an outer coating or foil layer complicates the manufacture process, thereby adding cost to the process and end product.

In addition to providing a reflective surface via foil layers, it is known apply metallic coatings, such as silver, to an outer surface of textile sleeves. Again, although the coatings can be effective in shielding the sleeve and contents therein from heat, the coating can be subject to wear, and in addition, are generally costly in material content, inventory and application. Further, they can be messy to apply. EP 2 270 267 discloses a textile sleeve as recited in the preamble of claim 1. WO 93/09281 discloses a textile fabric product which is heat-set to hold a specific geometry.

### SUMMARY OF THE INVENTION

A tubular textile heat shield for providing protection against heat to elongate members is provided. The tubular textile heat shield includes a tubular wall of interlaced yarn. The interlaced yarn includes polymeric monofilament yarns interlaced with one another. The polymeric monofilament yarns contain reflective aluminum particles interspersed therein, as extruded in the yarns, wherein the aluminum particles provide a reflective outer surface to the tubular wall and increase the radiant heat resistance of the yarn.

In accordance with an embodiment of the invention, the aluminum particle containing polymeric monofilament yarn is heat-set into a tubular configuration.

In accordance with the invention, the conductivity of the aluminum particle containing polymeric monofilament yarn is substantially unaffected by the interspersed aluminum particles. Accordingly, the conductivity of the aluminum particle containing polymeric monofilament yarn is the same or substantially the same as the polymeric yarn had it not included the aluminum particles.

In accordance with the invention, a method of constructing a tubular textile heat shield is also provided. The method includes providing extruded polymeric monofilament yarns containing reflective aluminum particles interspersed therein; and interlacing the polymeric monofilament yarns with one another and forming a textile tubular wall.

In accordance with an embodiment of the invention, the method includes heat-setting the aluminum particle containing polymeric monofilament yarns into a tubular configuration.

In accordance with the invention, the method includes interspersing the aluminum particles having a density within the polymeric monofilament yarns that substantially leaves the conductivity of the polymeric material of the polymeric yarns unaffected along the full length of the yarns.

### BRIEF DESCRIPTION OF THE DRAWINGS

These and other aspects, features and advantages of the invention will become readily apparent to those skilled in the art in view of the following detailed description of the presently preferred embodiments and best mode, appended claims, and accompanying drawings, in which:
Figure 1 is a schematic view of a protective textile sleeve constructed in accordance with one aspect of the invention shown disposed about an elongate member;
Figure 2 is a schematic view of a protective textile sleeve constructed in accordance with another aspect of the invention shown disposed about an elongate member; and
Figure 3 is a partially broken away view of an extruded monofilament yarn used to construct the sleeve of Figures 1 and 2.

### DETAILED DESCRIPTION OF PREFERRED EMBODIMENTS

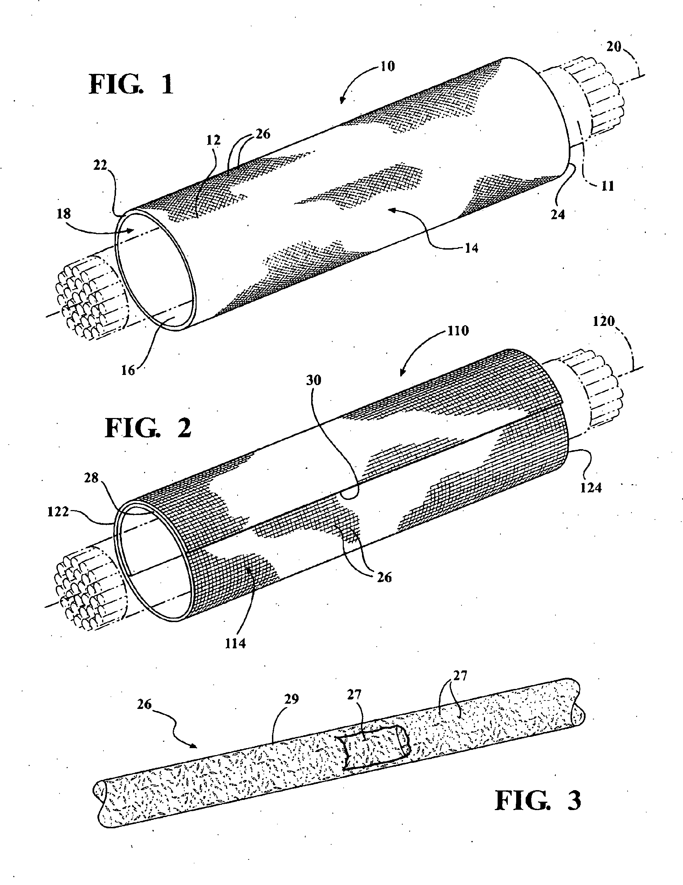

Referring in more detail to the drawings, Figure 1 shows a tubular textile heat shield, also referred to as textile sleeve 10, constructed according to one embodiment of the invention for providing protection against heat to elongate members, such as wires or a wire harness 11, contained within the sleeve 10. The textile sleeve 10 has a plurality of yarns interlaced with one another, such as via a braiding process, by way of example and without limitation, to form a tubular wall 12. The wall 12 illustrated is seamless and circumferentially continuous having a reflective outer surface 14 and an inner surface 16 defining a tubular cavity 18 extending axially along a central longitudinal axis 20 between opposite open ends 22, 24 of the sleeve 10. The tubular cavity 18 is sized, as desired in manufacture, for receipt of the elongate members 11. The reflective outer surface 14 provides the wall 12 with a radiant heat resistance to protect the elongate members 11 against unwanted exposed to elevated temperatures.

The wall 12 can be constructed having any suitable length and diameter and can be braided or otherwise constructed, i.e. woven, knitted, having a desired pattern for the intended application. Accordingly, the wall 12 can be constructed having various structural properties and configurations. The wall 12 is constructed of polymeric monofilament yarns 26 interlaced with one another. As shown in Figure 3, the polymeric monofilament yarns 26 contain reflective aluminum particles or powder granules 27 interspersed within the "as extruded" polymeric material 29 of the monofilaments 26, via a masterbatch compounding process. The aluminum particles 27 provide the reflective outer surface 14 (by reflective outer surface it is intended to mean the outer exposed surface itself as well a depth immediately beneath the outer surface that contains aluminum particles encapsulated by polymeric material 29 of the monofilament yarn 26) of the tubular wall 12 arid increase the radiant heat resistance of the polymeric yarn 26, and the particles are odorless at an ignition temperature of about 600 degrees Celsius. Accordingly, the polymeric yarn 26 is able to withstand increased temperatures from radiant heat sources, such as exhaust systems, for example, than if the reflective aluminum particles were not present. In addition, although the polymeric yarn 26 contains aluminum particulate 27, the conductivity of the polymeric monofilament yarn 26 remains the same or substantially the same as if the polymeric material 29 were void or absent of the aluminum particulate 27, and thus, the conductivity of the yarn 26 is unaffected or substantially unaffected by the presence of the interspersed aluminum particles 27.

With the polymeric yarn 26 containing the reflective aluminum particles, as extruded therein, the reflective heat resistant properties of the sleeve 10 are automatically provided upon interlacing the yarns 26 with one another. Accordingly, the need for secondary coating or layering operations to provide the sleeve 10 with heat resistance is negated, thereby offering economic efficiencies to the manufacture of the sleeve 10. Further, by allowing the yarns 26 to remain free from coating material or a reflective layer of material, the yarns 26 retain their full flexibility, both individually and relative to one another, given the yarns 26 are not bonded, glued or otherwise attached to one another by a coating material, and thus, the sleeve 10 is able to flex freely in use, and in addition, the weight of the sleeve 10 is minimized.

In Figure 2, a sleeve 110 constructed in accordance with another aspect of the invention is shown, wherein the same reference numerals, offset by a factor of 100, are used to identify like features.

The sleeve 110 is constructed with the same yarn filaments 26 as discussed above, however, the sleeve 110 is constructed as a self-wrapping, "cigarette" type sleeve. As such, the sleeve 110 has opposite edges 28, 30 extending generally parallel to a central longitudinal axis 120 between opposite ends 122, 124 of the sleeve 110. Upon forming a wall 114 by interlacing the polymeric yarn 26, the wall 114 is heat-set to take on its self-wrapping configuration, such that the opposite edges 28, 30 overlap one another in the absence of an externally applied force.

In accordance with yet another aspect of the invention, a method of constructing a tubular textile heat shield 10, 110 is provided. The method includes providing extruded polymeric monofilament yarns 26 containing reflective aluminum particles 27 interspersed therein. Then, interlacing the polymeric monofilament yarns 27 with one another and forming a textile tubular wall 114.

The method further includes heat-setting the aluminum particle containing polymeric monofilament yarns 27 into a self-biasing tubular configuration.

The method further yet includes interspersing the aluminum particles 27 having a density within the polymeric monofilament yarns 26 that substantially leaves the conductivity of the polymeric material 29 of the polymeric yarns 26 unaffected along the full length of the yarns 26.

It should be recognized that sleeves 10, 110 constructed in accordance with the invention are suitable for use in a variety of applications, regardless of the sizes and lengths required. For example, they could be used in automotive, marine, industrial, aeronautical or aerospace applications, or any other application wherein protective sleeves are desired to protect nearby components against heat radiation.

It is to be understood that the above detailed description is with regard to some presently preferred embodiments, and that other embodiments readily discernible from the disclosure herein by those having ordinary skill in the art are incorporated herein and considered to be within the scope of any ultimately allowed claims.

## Claims

1. A tubular textile heat shield (10; 110) for providing protection against heat to elongate members (11) contained therein, comprising:
a tubular wall (12; 114) of interlaced yarn, said interlaced yarn including polymeric monofilament yarns (26) interlaced with one another, said polymeric monofilament yarns containing reflective aluminum particles (27) interspersed therein as extruded wherein the aluminum particles provide a reflective outer surface (14) and increase the radiant heat resistance of the yarn,
**characterised in that** the conductivity of said polymeric monofilament yarns (26) is substantially unaffected by the interspersed aluminum particles (27).

2. The tubular textile heat shield (110) of claim 1 wherein said polymeric monofilament yarns (26) are heat-set into a tubular configuration.

3. A method of constructing a tubular textile heat shield (10; 110), comprising:
providing extruded polymeric monofilament yarns (26) containing reflective aluminum particles (27) interspersed therein; and
interlacing the polymeric monofilament yarns with one another and forming a textile tubular wall (12; 114);
**characterized by**
providing the extruded polymeric monofilament yarns (26) having a density of aluminum particles (27) within the polymeric monofilament yarns that substantially leaves the conductivity of the polymeric material of the polymeric yarns unaffected along the full length of the yarns.

4. The method of claim 3 further including heat-setting the polymeric monofilament yarns (26) to bias the tubular wall (114) into a tubular configuration.

## Patentansprüche

1. Röhrenförmiger Textilhitzschild (10; 110) zur Bereitstellung eines Schutzes darin enthaltener länglicher Teile (11) gegen Hitze, der umfasst:
eine röhrenförmige Wand (12; 114) aus verflochtenem Garn, wobei das verflochtene Garn umfasst: polymere Monofilamentgarne (26), die miteinander verflochten sind, wobei die polymeren Monofilamentgarne reflektierende Aluminiumpartikel (27) enthalten, die darin stranggepresst eingestreut sind, wobei die Aluminiumpartikel eine reflektierende äußere Oberfläche (14) bereitstellen und die Beständigkeit des Garns gegen Strahlungswärme erhöhen,
**dadurch gekennzeichnet, dass** die Leitfähigkeit der polymeren Monofilamentgarne (26) durch die eingestreuten Aluminiumpartikel (27) im Wesentlichen unbeeinträchtigt bleibt.

2. Röhrenförmiger Textilhitzeschild (110) gemäß Anspruch 1, wobei die polymeren Monofilamentgarne (26) in eine röhrenförmige Konfiguration thermofixiert werden.

3. Verfahren zur Herstellung eines röhrenförmigen Textilhitzeschildes (10; 110), das umfasst:
Bereitstellung stranggepresster polymerer Monofilamentgarne (26), die darin eingestreute reflektierende Aluminiumpartikel (27) enthalten; und
Verflechten der polymeren Monofilamentgarne miteinander und Bilden einer röhrenförmigen Textilwand (12; 114);
**gekennzeichnet durch**:
Bereitstellung der stranggepressten polymeren Monofilamentgarne (26), die über eine Dichte von Aluminiumpartikeln (27) innerhalb der polymeren Monofilamentgarne verfügen, die die Leitfähigkeit des polymeren Materials der polymeren Garne über die ganze Länge der Garne unbeeinträchtigt lässt.

4. Verfahren gemäß Anspruch 3, das weiterhin umfasst: Thermofixierung der polymeren Monofilamentgarne (26), um die röhrenförmige Wand (114) in eine röhrenförmige Konfiguration vorzuformen.

## Revendications

1. Protection thermique tubulaire en textile (10 ; 110) pour fournir la protection contre la chaleur à des éléments allongés (11) contenus à l'intérieur de cette dernière, comprenant :
une paroi tubulaire (12; 114) de fil entrelacé, ledit fil entrelacé comprenant des fils monofilaments polymères (26) entrelacés entre eux, lesdits fils monofilaments polymères contenant des particules d'aluminium réfléchissantes (27) parsemées à l'intérieur de ces derniers, tels qu'extrudés, dans laquelle les particules d'aluminium fournissent une surface externe réfléchissante (14) et augmentent la résistance à la chaleur rayonnante du fil,
**caractérisée en ce que** la conductivité desdits fils monofilaments polymères (26) est sensiblement non affectée par les particules d'aluminium (27) parsemées.

2. Protection thermique tubulaire en textile (110) selon la revendication 1, dans laquelle lesdits fils monofilaments polymères (26) sont fixés thermiquement dans une configuration tubulaire.

3. Procédé pour fabriquer une protection thermique tubulaire en textile (10 ; 110) comprenant les étapes consistant à :
prévoir des fils monofilaments polymères (26) extrudés contenant des particules d'aluminium réfléchissantes (27) parsemées à l'intérieur de ces derniers ; et
entrelacer les fils monofilaments polymères entre eux et former une paroi tubulaire en textile (12 ; 114) ;
**caractérisé par** l'étape consistant à :
prévoir les fils monofilaments polymères (26) extrudés ayant une densité de particules d'aluminium (27) à l'intérieur des fils monofilaments polymères qui laisse sensiblement la conductivité du matériau polymère des fils polymères non affectée le long de toute la longueur des fils.

4. Procédé selon la revendication 3, comprenant en outre l'étape consistant à fixer thermiquement les fils monofilaments polymères (26) pour solliciter la paroi tubulaire (114) en une configuration tubulaire.
